# EUROPÄISCHE PATENTANMELDUNG

(11) **EP 2 724 931 A2**
(43) Veröffentlichungstag der Anmeldung: **30.04.2014**
(21) Anmeldenummer: 13189582.3
(22) Anmeldetag: 21.10.2013
(51) Int. Cl.: B64B 1/52

(54) **Ballonkransystem**

(30) Priorität: 26.10.2012 DE 102012219624
(71) Anmelder: CL CargoLifter GmbH & Co. KG a .A., 14057 Berlin (DE)
(72) Erfinder: Freiherr von Gablenz, Carl-Heinrich, 14057 Berlin (DE); von Gablenz, Alexander, 14057 Berlin (DE); Dörjer, Manfred, 08499 Mylau (DE)
(74) Vertreter: Gulde & Partner

(57) **Zusammenfassung**

Die Erfindung betrifft ein Ballonkransystem (B; B1, B2; B3) umfassend mindestens einen fesselseilgeführten Auftriebskörper (1), insbesondere mindestens einen Ballon, und ein Seilsystem zur Fesselung des Auftriebskörpers (1) in seiner durch eine ständige Auftriebskraft (1) schwebenden Gebrauchsposition, wobei das Seilsystem mindestens ein mit einer Hülle des Auftriebskörpers (1) verbundenes Fixierungselement (20) aufweist, welches entlang eines vorgebbaren Breitengrades des Auftriebskörpers (1) angeordnet ist, und mindestens vier Fesselseile (F1, F2, F3, F4) aufweist, die einerseits auf dem vorgegebenen Breitengrad im Wesentlichen gleichmäßig auf dem zugehörigen Umfang des Auftriebskörpers (1) verteilt an dem Fixierungselement (20) angreifen, und die andererseits indirekt auf einem Gelände (G) unterhalb des Auftriebskörpers (1) verankert sind, wobei die Verankerung mit dem Gelände (G) über mit den mindestens vier Fesselseilen (F1, F2, F3, F4) in Verbindung stehende antriebslose Halte- und Richtungswechselelemente (H10, H20, H30, H40) und/oder angetriebene Halte- und Richtungswechselelemente (R10, R20, R30, R40) erfolgt, die ausschließlich geländefest angeordnet sind, und eine erste Verschiebevorrichtung (I) bilden, oder die teilweise geländefest und teilweise auf einer zwischengeschalteten geländefesten Verschiebevorrichtung (Fi-x, Fi-y; Fa-x, Fa-y) angeordnet sind, und eine zweite kombinierte Verschiebevorrichtung (II) bilden, oder die ihrerseits ausschließlich auf mindestens einer zwischengeschalteten geländefesten Verschiebevorrichtung (Fi-x, Fi-y; Fa-x, Fa-y) angeordnet sind und eine dritte Verschiebevorrichtung (III) bilden.

## Beschreibung

Die Erfindung betrifft ein Ballonkransystem umfassend mindestens einen fesselseilgeführten Auftriebskörper, insbesondere mindestens einen Ballon, und ein Seilsystem zur Fesselung des Auftriebskörpers in einer durch eine ständige Auftriebskraft des Auftriebskörpers schwebenden Gebrauchsposition. Das Seilsystem umfasst Lastseile an denen mindestens ein Lastaufnahmemittel angeordnet ist. Das Lastaufnahmemittel dient zur Aufnahme von Lasten. Durch die ständige Auftriebskraft des Ballons schwebt die Last unter dem sich in Gebrauchsposition befindenden Ballon über einem Gelände.

Die Druckschrift DE 102 10540 B4 der Anmelderin beschreibt bereits einen seilgeführten Auftriebskörper, der über drei am Gelände verankerte Seile gefesselt ist und deren freie Länge über zugeordnete, steuerbare Bodenwinden veränderbar ist, wobei die Takelung des mindestens einen Auftriebskörpers auf einen Ballonknoten geführt ist, der über ein Zwischenseil mit einem Kranknoten verbunden ist, von dem die drei Fesselseile und ein Hakenseil abzweigen, wobei die Fesselseile mit je einer steuerbaren Winde verbunden sind. Die über je eine bodenverankerte Umlenkrolle geführten Fesselseile sind eine Kombination aus Fixseil und Flaschenzug. Zum Transport des Auftriebskörpers ist ein Transportseil auf den Ballonknoten geführt. Die Winden sind fernsteuerbar, wobei der Istwert zur Steuerung der Winden die Vorspannung in den Fesselseilen ist. Die Seile stellen ein Haltesystem für den Auftriebskörper dar.

Die Aufgabe der Erfindung besteht darin, ein alternatives Halte-Seilsystem für einen Auftriebskörper zu schaffen, damit ein komfortables Umsetzen von Lasten ähnlich eines Kranes ermöglicht wird, wobei insbesondere eine Pendelbewegung des Auftriebskörpers verringert oder vermieden werden soll.

Die Aufgabe der Erfindung wird durch ein Ballonkransystem gelöst, welches mindestens einen fesselseilgeführten Auftriebskörper, insbesondere mindestens einen Ballon und ein Seilsystem zur Fesselung des Auftriebskörpers in seiner durch eine ständige Auftriebskraft schwebenden Gebrauchsposition umfasst, wobei das Seilsystem mindestens ein mit einer Hülle des Auftriebskörpers verbundenes Fixierungselement aufweist, welches entlang eines vorgebbaren Breitengrades des Auftriebskörpers angeordnet ist, und mindestens vier Fesselseile aufweist, die einerseits auf dem vorgegebenen Breitengrad im Wesentlichen gleichmäßig auf dem zugehörigen Umfang des Auftriebskörpers verteilt an dem Fixierungselement angreifen, und die andererseits indirekt auf einem Gelände unterhalb des Auftriebskörpers verankert sind, wobei die Verankerung mit dem Gelände über mit den mindestens vier Fesselseilen in Verbindung stehende antriebslose Halte- und Richtungswechselelemente und/oder angetriebene Halte- und Richtungswechselelemente erfolgt, die ausschließlich geländefest angeordnet sind, und eine erste Verschiebevorrichtung bilden, oder die teilweise geländefest und teilweise auf einer zwischengeschalteten geländefesten Verschiebevorrichtung angeordnet sind, und eine zweite kombinierte Verschiebevorrichtung bilden, oder die ihrerseits ausschließlich auf mindestens einer zwischengeschalteten geländefesten Verschiebevorrichtung angeordnet sind und eine dritte Verschiebevorrichtung bilden.

Die Erfindung umfasst mehrere bevorzugte Möglichkeiten innerhalb des Ballonkransystems eine Verschiebevorrichtung zum Verschieben/Verfahren von an dem Auftriebskörper angehängten Lasten auszubilden.

Die Ballonkransysteme mit den verschiedenen Verschiebevorrichtungen ermöglichen es den Ballon und die Last in eine Raumrichtung, in zwei Raumrichtungen oder in drei Raumrichtungen zu bewegen, wie noch näher erläutert wird.

Hinsichtlich des Aufbaus eines Ballonkransystems werden die Verschiebevorrichtungen zum manuellen oder automatischen Verschieben/Verfahren des Ballons mit der angehängten Last in drei Typen I; II; III eingeteilt, deren technischen Merkmale nachfolgend grundsätzlich genannt sind.

### Typ I:

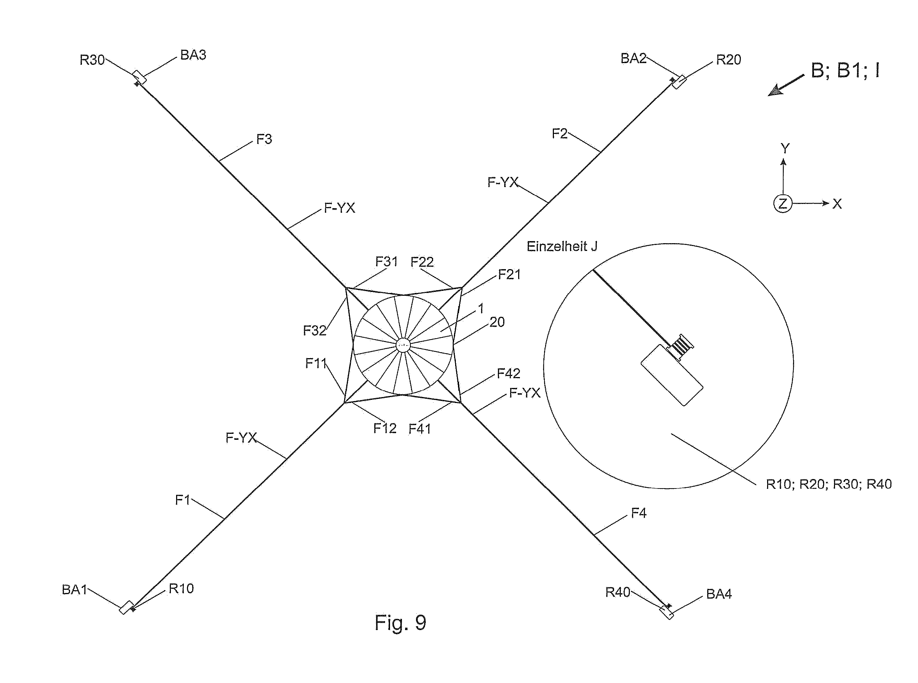

Ein erster Typ I einer Verschiebevorrichtung wird erfindungsgemäß ausgebildet, wenn die antriebslosen und/oder angetriebenen Halte- und Richtungswechselelemente ausschließlich geländefest angeordnet sind. Siehe beispielsweise Figur 9.

### Typ II:

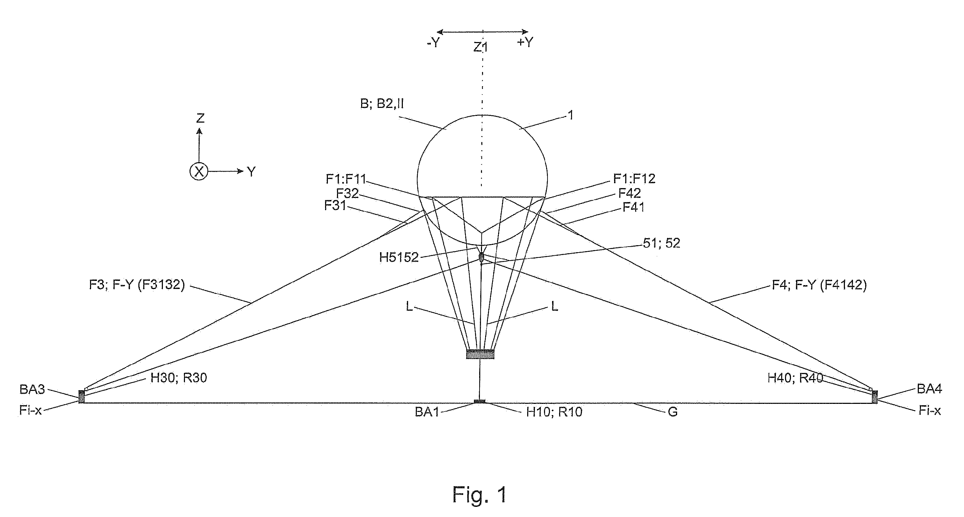

Ein zweiter Typ II einer Verschiebevorrichtung wird erfindungsgemäß ausgebildet, wenn die antriebslosen und/oder angetriebenen Halte- und Richtungswechselelemente teilweise geländefest und teilweise auf/an einer zwischengeschalteten geländefesten Verschiebevorrichtung angeordnet sind. Die zwischengeschaltete geländefeste Verschiebevorrichtung ist somit direkt mit dem Gelände verbunden. Bei diesem zweiten Typ II kommt es zu einer Kombination von antriebslosen und/oder angetriebenen geländefesten Halte- und Richtungswechselelementen, die direkt mit dem Gelände verbunden sind, mit mindestens einer zwischen dem Gelände und den Halte- und Richtungswechselelementen geschalteten geländefesten Verschiebevorrichtung, so dass die Halte- und Richtungswechselelemente dann nur indirekt mit dem Gelände verbunden sind. Dieser zweite Typ II wird deshalb als kombinierte Verschiebevorrichtung für das Ballonkransystem bezeichnet. Siehe beispielsweise Figur 1 bis Figur 3.

### Typ III:

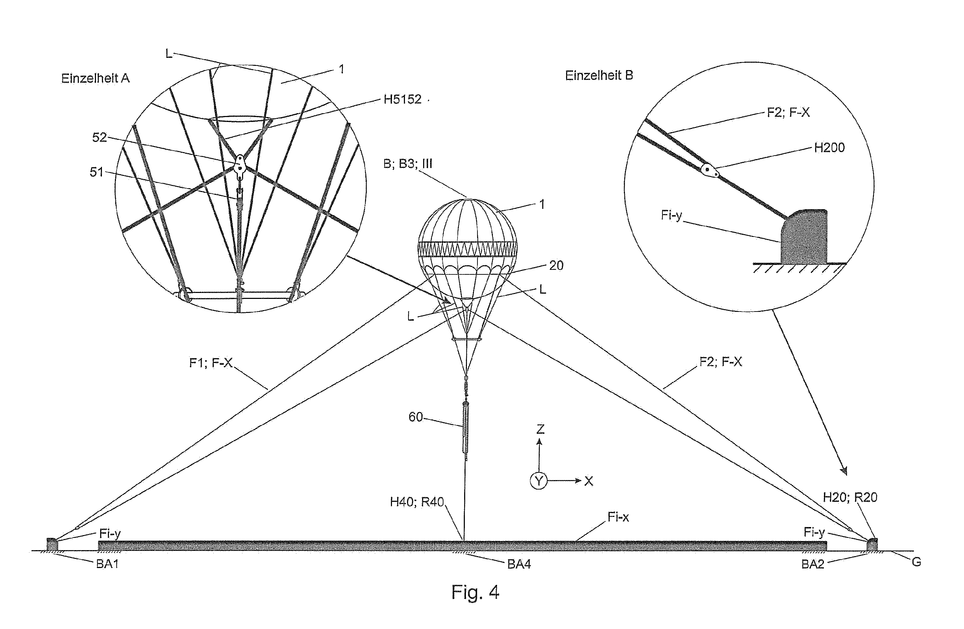

Ein dritter Typ III einer Verschiebevorrichtung wird erfindungsgemäß ausgebildet, wenn die antriebslosen und/oder angetriebenen Halte- und Richtungswechselelemente ausschließlich auf mindestens einer zwischengeschalteten geländefesten Verschiebevorrichtung angeordnet sind. Siehe beispielsweise Figur 4 und 5 sowie 6 und 7 und Figur 8.

In bevorzugter Ausgestaltung der Erfindung kann das Ballonkransystem auf einem Gelände errichtet werden, welches hinsichtlich seiner Höhenlage variiert. Ein Bodenverankerungssystem sorgt für eine geländeseitige Verankerung der Halte- und Richtungswechselelemente beziehungsweise der zwischengeschalteten geländefesten Verschiebevorrichtung. Das Ballonkransystem kann somit in vorteilhafter Weise auf einem ebenen und unebenen Gelände über Ankerpunkte, die in ihrer horizontalen Höhenlage variieren, eingesetzt werden, wie nachfolgend in den Ausführungsvarianten noch näher erläutert wird.

Das mindestens eine Fixierungselement, welches erfindungsgemäß entlang eines Breitengrades des Auftriebskörpers angeordnet ist, wird auf dem Äquator oder einem unterhalb des Äquators liegenden Breitengrad angeordnet. Es hat sich in vorteilhafter Weise herausgestellt, dass das Fixierungselement durch Anbringung auf diesem Breitengrad und Fesselung mit vier Fesselseilen, die gleichmäßig auf dem Breitengrad verteilt und mit dem Gelände verbunden werden, eine Pendelbewegung des Auftriebskörpers stark reduziert.

Versuche haben ergeben, dass eine Anordnung des Fixierungselementes unterhalb des Äquators auf einem Breitengrad zwischen dem Äquator und 40° südlicher Breite, insbesondere bei ca. 30° südlicher Breite besonders effektiv ist, um bei entsprechender Anbindung von mindestens vier Fesselseilen eine besonders starke Reduzierung der Pendelneigung zu bewirken.

Als besonders praktikabel hat sich als Fixierungselement ein Ösenkranzband erwiesen, welches mindestens vier Ösen zum Einhängen der vier Fesselseile umfasst. Die Fesselseile besitzen ihrerseits entsprechende Schäkel oder dergleichen, welche in die Ösen des Ösenkranzbandes einhängbar sind.

In bevorzugter Ausgestaltung der Erfindung sind die vier Fesselseile auf der zu dem Auftriebskörper gerichteten Seite zudem als Gabelseile ausgebildet. Das heißt, die vier Fesselseile besitzen mehrere gabelartige Enden mit vorzugsweise mindestens einem endseitigen Schäkel, die in mehrere Ösen des Ösenkranzbandes eingreifen, so dass auf dem Umfang des gewählten Breitengrades jeweils eine mehrfache Anbindung der mindestens vier Fesselseile erfolgt. Diese Ausgestaltung hat den Effekt, dass der Auftriebskörper durch das derart ausgestaltete Seilsystem mit den mit Gabelseilen versehenen Fesselseilen fest, das heißt korsettartig von dem Ösenkranzband an vielen durch die Gabelseile gebildeten Haltepunkte umgriffen und in mindestens vierfacher beziehungsweise mehrfacher Anbindung durch die mindestens vier Fesselseile geländeseitig fixiert wird, wodurch die Pendelneigung stark reduziert ist. Es hat sich in vorteilhafter Weise herausgestellt, dass die Pendelneigung durch mindestens eine Vierfachanbindung des Auftriebskörpers gegenüber einer Dreifachanbindung stärker reduziert wird. Auch die erzielte Wirkung durch Anbringung der Fesselseile mittels der Gabelseile hat zu einem Effekt hinsichtlich der Reduzierung der Pendelneigung geführt.

In einer bevorzugten Ausgestaltung der Erfindung wird als zwischengeschaltete Verschiebevorrichtung (Typ II und Typ III) mindestens ein geländefestes Schienensystems ausgebildet.

In einer anderen bevorzugten Ausgestaltung der Erfindung wird als zwischengeschaltete Verschiebevorrichtung (Typ II und Typ III) ein geländefestes Seilzugsystem ausgebildet.

Beide Systeme, sowohl das geländefeste Schienensystem als auch das geländefeste Seilzugsystem, können als antriebslose zwischengeschaltete Verschiebevorrichtung oder als angetriebene zwischengeschaltete Verschiebevorrichtung ausgebildet werden, wie noch erläutert wird.

Erfindungsgemäß werden als antriebslose Halte- und Richtungswechselelemente Umlenkrollen vorgesehen, wobei als angetriebene Halte- und Richtungswechselelemente, z. B. Spillwinden oder Trommelwinden zum Einsatz kommen.

Die erfindungsgemäße Lösung umfasst eine große Anzahl von Ausgestaltungsmöglichkeiten, die in der nachfolgenden Beschreibung nicht abschließend als Ausführungsvarianten erläutert sind.

Die Erfindung wird nachfolgend in Ausführungsvarianten anhand der zugehörigen Figuren erläutert. Es zeigen:
- Figur 1: ein Ballonkransystem in einer Seitenansicht in x-Raumrichtung gesehen mit einer Verschiebevorrichtung des zweiten Typs;
- Figur 2: das Ballonkransystem nach Figur 1 in einer Seitenansicht in y-Raumrichtung gesehen;
- Figur 3: das Ballonkransystem nach den Figuren 1 und 2 in einer Draufsicht;
- Figur 4: ein alternatives Ballonkransystem in einer Seitenansicht und zwei Einzelheiten A und B in y-Raumrichtung gesehen mit einer Verschiebevorrichtung des dritten Typs;
- Figur 5: das Ballonkransystem nach Figur 4 in einer Draufsicht mit einer Einzelheit C;
- Figur 6: ein alternatives Ballonkransystem in einer Seitenansicht und zwei Einzelheiten D und E in y-Raumrichtung gesehen mit einer Verschiebevorrichtung des dritten Typs;
- Figur 7: das Ballonkransystem nach Figur 6 in einer Draufsicht und einer Einzelheit F;
- Figur 8: ein alternatives Ballonkransystem in einer Draufsicht und Einzelheiten G und H mit einer Verschiebevorrichtung des dritten Typs;
- Figur 9: ein alternatives Ballonkransystem in einer Draufsicht und einer Einzelheit J mit einer Verschiebevorrichtung des erstens Typs.

Die nachfolgende Bezeichnungsweise der Raumrichtungen erfolgt in kartesischen Koordinaten. Für die Zwecke der Beschreibung der Ausführungsvarianten soll eine Raumrichtung eines Elementes in eine horizontale Richtung mit "x" bezeichnet werden. Mit "y" wird die Raumrichtung in der Horizontalen orthogonal zur x-Richtung bezeichnet. Mit "z" wird die Raumrichtung in der Vertikalen des Elementes orthogonal zur x-Richtung bezeichnet.

Ferner wird zur Erläuterung der Anordnung von Elementen bezüglich des Auftriebskörpers ein bekanntes Koordinatensystem benutzt, welches zu Festlegungen von Positionen auf der Erdoberfläche mit sich rechtwinklig schneidenden Längen- und Breitenkreisen dient. Dieses Koordinatensystem wird jetzt für die Positionsangabe auf der Oberfläche des Auftriebskörpers, insbesondere eines kreisrunden Ballons benutzt. Die Breitengrade des Ballons werden dabei wie üblich vom Äquator aus gezählt, die Pole liegen bei 90° nördlicher Breite beziehungsweise bei 90° südlicher Breite. Die Längengrade sind für die Beschreibung nicht von Bedeutung.

Innerhalb aller Figuren werden nachfolgend die gleichen Bezugszeichen für gleiche Bauteile verwendet, wobei gegebenenfalls nicht in jeder Figur erneut alle bereits vorgestellten Bauteile anhand der Bezugszeichen nochmals erläutert werden.

Gemäß der bereits erwähnten Druckschrift DE 102 10 540 umfasst ein bekanntes Ballonkransystem mindestens einen Auftriebskörper in der Art eines Ballons, der durch Luftverdrängung den zur Vorspannung der Fesselseile des Seilsystems nötigen Auftrieb erzeugt. Das Ballonkransystem dient zum Heben, Verfahren und Positionieren sowie Absenken von Lasten. Das bisherige Ballonkransystem besteht aus einem Auftriebskörper mit einem Ballonknoten, einem Zwischenseil, einem Kranknoten und einem Hakenseil sowie drei Fesselseilen.

Ausgehend von dieser Konfiguration werden nachfolgend alternative Ballonkransysteme mit dem übergeordneten Bezugszeichen B mit einem Seilsystem vorgeschlagen, welches ebenfalls über einen oder mehrere Auftriebskörper, insbesondere einen oder mehrere Ballone in Gebrauchsposition mit dem Gelände verspannt ist.

Die verschiedenen Ballonkransysteme B; B1, B2, B3 sind wie erwähnt durch verschiedene Verschiebevorrichtungen gekennzeichnet.

Ein Ballonkransystem B mit einer Verschiebevorrichtung nach dem ersten Typ I wird nachfolgend mit B1 bezeichnet. Ein Ballonkransystem B mit einer Verschiebevorrichtung nach dem zweiten Typ II wird nachfolgend mit B2 bezeichnet. Ein Ballonkransystem B mit einer Verschiebevorrichtung nach dem dritten Typ III wird nachfolgend mit B3 bezeichnet.

Die erfindungsgemäßen Ballonkransysteme B;B1, B2, B3 aller Typen I, II, III umfassen Halteund Richtungswechselelemente um den Auftriebskörper 1 auf dem Gelände G zu halten, zu fesseln, zu führen beziehungsweise um die Bewegungsrichtung des Auftriebskörpers in mindestens eine Raumrichtung verändern zu können.

Alle Figuren zeigen den Auftriebskörper 1 in der Art eines Ballons mit einer ständigen Auftriebskraft in z-Richtung erzeugenden schwebenden Gebrauchsposition.

Die Hülle des Ballons 1 ist mit einem in den Ausführungsvarianten unterhalb des Äquators des Ballons umlaufenden Fixierungselement, in der Art eines Ösenkranzbandes 20 versehen. Das Ösenkranzband 20 umfasst Ösen an denen das Seilsystem oder auch eine so genannte Takelung befestigbar ist, und das/die insbesondere reversibel mittels Schäkeln oder dergleichen an dem Ösenkranzband 20 einhängbar ist.

Alle Ballonkransysteme B umfassen mindestens vier Fesselseile F1, F2, F3, F4.

Die Fesselseile F1, F2, F3, F4 gehen erfindungsgemäß in einer horizontalen x/y-Ebene gesehen von dem Ösenkranzband 20 in die vier Himmelsrichtungen ab und sind somit bevorzugt orthogonal zueinander an dem Ösenkranzband 20 vorzugsweise über Gabelseile F11, F12; F21, F22; F31, F32; F41, F42 befestigt, wie nachfolgend erläutert wird. Von dort werden die Fesselseile F1, F2, F3, F4 zu einem darunter liegenden Gelände G geführt. Die orthogonale Anordnung der Fesselseile F1, F2, F3, F4 stellt eine bevorzugte Ausführungsform dar. Es ist denkbar, dass eine Anordnung gewählt wird, bei der die Fesselseile F1, F2, F3, F4 nicht orthogonal zueinander angeordnet sind.

Durch die mindestens vierfache geländeseitige Anbindung über die Fesselseile F1, F2, F3, F4 bevorzugt in die vier Himmelsrichtungen, wie noch näher erläutert wird, werden mögliche Pendelbewegungen des Ballons 1 nahezu vermieden.

### GenerellerAufbau der Ballonkransysteme B; B1, B2, B3 nach Figur 1 bis 8:

Figur 1 zeigte eine Seitenansicht des Ballonkransystems B2 mit Blick eines Betrachters in x-Richtung. Drei Fesselseile F1, F3, F4 der vier Fesselseile F1, F2, F3, F4 sind in Figur 1 sichtbar.

Zur besseren Führung des Ballons 1, insbesondere zur Vermeidung von Pendelbewegungen sind die beiden Fesselseile F3, F4 als Gabelseile F31, F32 beziehungsweise F41, F42 ausgebildet. Die Gabelseile sind an dem Ösenkranzband 20 befestigt. Die beispielhafte zweifache Gabelung kann auch eine drei- oder vierfache beziehungsweise vielfache Gabelung sein, so dass sich in vorteilhafter Weise je Fesselseil F3, F4 noch mehr als zwei Befestigungspunkte an dem Ösenkranzband 20 ergeben.

Die Gabelseile F31, F32 und F41, F42 werden ballonabgewandt an einem Knotenpunkt jeweils zu einem einzelnen Fesselseil F3132, F4142 zusammengefasst.

Die Fesselseile F3; F3132 und F4; F4142 (Figur 1) werden jeweils über ein antriebsloses Halteund Richtungswechselelement H30, H40 oder über ein angetriebenes Halte- und Richtungswechselelement R30, R40 zu einem ersten Führungselement 51 geführt.

Die Fesselseile F3; F3132 und F4; F4142 sind auf der dem Ballon 1 gegenüber liegenden Seite miteinander verbunden. Sie sind somit auf ihrer dem Ballon 1 gegenüber liegenden Seite zu einem zweiten Fesselseil F-Y durchgehend miteinander verbunden.

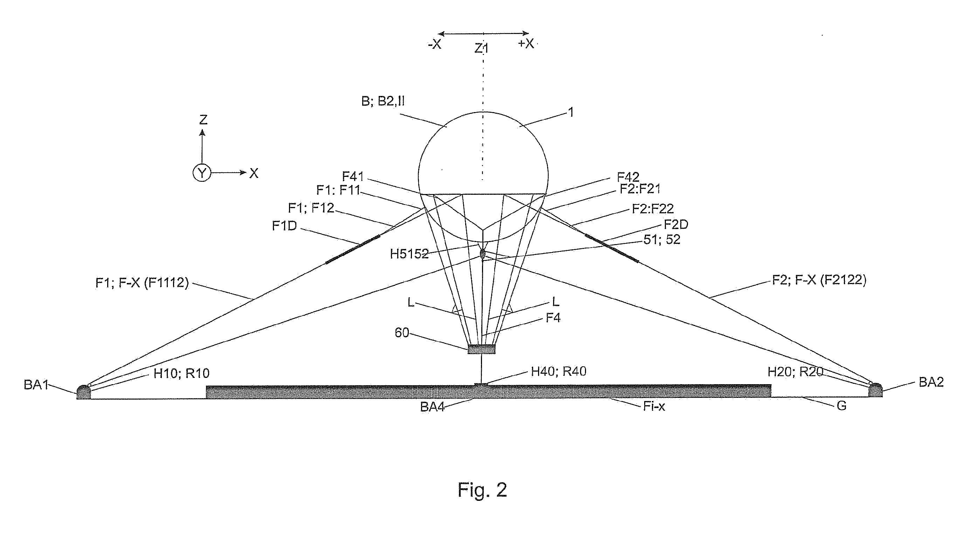

Figur 2 zeigt eine Seitenansicht des Ballonkransystems B2 mit Blick eines Betrachters in y-Richtung. Drei Fesselseile F1, F2, F3 der vier Fesselseile F1, F2, F3, F4 sind in Figur 2 sichtbar.

Zur besseren Führung des Ballons 1 ist jedes der Fesselseile F1, F2 analog zu den Fesselseilen F3, F4 wieder als Gabelseil F11, F12 beziehungsweise F21, F22 ausgebildet. Die Gabelseile sind ebenfalls an dem Ösenkranzband 20 befestigt. Die beispielhafte zweifache Gabelung kann analog zu der Beschreibung der anderen Gabelseile F31, F32 beziehungsweise F41, F42 auch eine drei- oder vierfache beziehungsweise vielfache Gabelung sein, so dass sich in vorteilhafter Weise je Fesselseil mehr als zwei Befestigungspunkte an dem Ösenkranzband 20 ergeben.

Die Gabelseile F11, F12 und F21, F22 werden jeweils zu einem einzelnen Fesselseil F1112, F2122 zusammengefasst. Die Fesselseile F1112, F2122 werden wie erläutert jeweils über antriebslose Halte- und Richtungswechselelemente H10, H20 oder über angetriebene Halteund Richtungswechselelemente R10, R20 zu einem zweiten Führungselement 52 geführt.

Die Fesselseile F1112, F2122 (F1, F2)sind auf der dem Ballon 1 gegenüber liegenden Ende miteinander verbunden. Sie sind somit zu einem ersten Fesselseil F-X durchgehend miteinander verbunden.

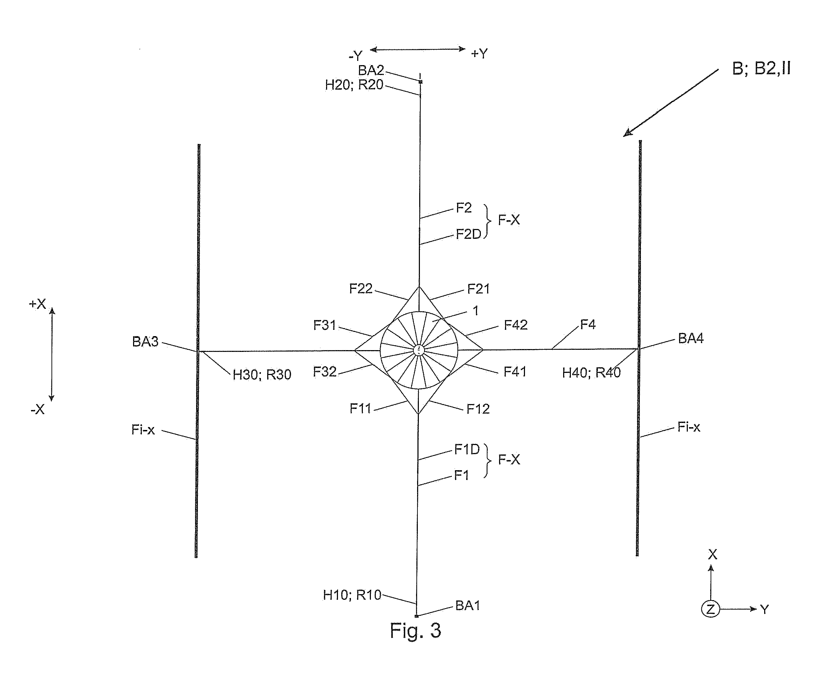

Die Figur 3 zeigt diese Ausgestaltung in einer Draufsicht. Es wird sichtbar, dass die Fesselseile F1, F2 ausgehend von einer vertikalen in z-Richtung in die Blattebene hinein verlaufenden Z1-Achse des Ballons in +/-x-Richtung verlaufen. Die Fesselseile F3, F4 verlaufen ausgehend von der vertikalen in z-Richtung in die Blattebene hinein verlaufenden Z1-Achse des Ballons 1 in +/- y-Richtung.

Wie erläutert, sind die von den Gabelseilen F11, F12 beziehungsweise F21, F22 abgehenden Fesselseile F1, F2 jeweils in bevorzugter Ausgestaltung der Erfindung orthogonal zu den von den Gabelseilen F31, F32 beziehungsweise F41, F42 abgehenden F3, F4 Fesselseilen angeordnet.

Die Fesselseile F1, F2, F3, F4 gehen in der horizontalen x/y-Ebene gesehen in die vier Himmelsrichtungen von dem Ballon 1 ab und sind in bevorzugter Ausgestaltung der Erfindung orthogonal zueinander angeordnet sein und sind vorzugsweise über die Gabelseile F11, F12; F31, F32; F31, F32 F41, F42 an dem Ösenkranzband 20 befestigt. Ausführungsformen bei denen die Fesselseile nicht orthogonal zueinander angeordnet sind, werden nicht ausgeschlossen.

Die Führungselemente 51, 52 sind in Figur 1 und 2 sichtbar.

Das erste untere angeordnete Führungselement 51 führt beispielsweise das erste durchgehende Fesselseil F-X (F1, F2), während das zweite oben angeordnete Führungselement 52 das zweite durchgehende Fesselseil F-Y (F3, F4) führt. Es versteht sich das diese Anordnung und Zuordnung nur beispielhaft ist.

Die Figuren 1 und 2 zeigen zudem, dass die Führungselemente 51, 52 indirekt über Halteseile H5152 mit dem Südpol des Ballons 1 verbunden sind.

In einer anderen nicht dargestellten Ausgestaltung wird auf die Halteseile verzichtet. Die Führungselemente 51, 52 sind dann direkt mit der Ballonhülle am Südpol des Ballons 1 in geeigneter Weise verbunden.

Schließlich sind, wie die Figuren 1 und 2 zeigen, am Ösenkranzband 20 umlaufend diverse Lastseile L angeordnet, insbesondere eingehängt, die im Wesentlichen an einer Stelle zusammenlaufen und dort einen so genannten Swivel bilden. Die Lastseile L verlaufen in Gebrauchsposition des Ballonkransystems B im Wesentlichen vertikal in z-Richtung und halten ein Lastaufnahmemittel 60, welches eine nicht näher dargestellte Last aufnehmen kann.

Das Lastaufnahmemittel 60 kann eine Traverse und/oder ein Kranhaken sein, wobei die Last über eine zwischen Swivel und Lastaufnahmemittel 60 zwischengeschaltete Höhenverstelleinrichtung, insbesondere einen Flaschenzug, eine Winde oder einen Kettenzug an dem Lastaufnahmemittel 60 angeordnet werden kann, wodurch die Last in Gebrauchsposition jedes Ballonkransystems B mittels der Höhenverstelleinrichtung in +/- z-Richtung höhenverstellbar ist.

Der Ausgleich von Höhenunterschieden im Gelände G beziehungsweise das Anheben/Absenken der Last in +/- z-Richtung vor dem Verfahren oder während des Verfahrens des Ballons 1 in +/-x-Richtung und/oder +/-y-Richtung erfolgt in einer ersten Möglichkeit durch eine Höhenverstelleinrichtung (Winde, Kettenzug oder dergleichen im Lastaufnahmebereich) durch Anheben oder Absenken der Las, wie noch erläutert wird.

Der Ausgleich von Höhenunterschieden im Gelände G in +/- z-Richtung beziehungsweise das Anheben/Absenken der Last in +/- z-Richtung erfolgt während des Verfahrens des Ballons 1 in +/-x-Richtung und/oder +/-y-Richtung in einer zweiten Möglichkeit durch sich einstellende Veränderungen der Teillängen der Seile der Seilsysteme F-X und/oder F-Y, wie ebenfalls noch erläutert wird.

Der Ausgleich von Höhenunterschieden im Gelände G beziehungsweise das Anheben/Absenken der Last in +/- z-Richtung vor dem Verfahren oder während des Verfahrens des Ballons 1 in +/-x-Richtung und/oder +/-y-Richtung erfolgt in einer dritten Möglichkeit durch eine Höhenverstellung mittels mindestens eines Höhenverstellelementes, das zwischen einer zusätzlichen Umlenkrolle in den Fesselseilen und den antriebslosen oder angetriebenen geländefesten oder auf einer geländefesten zwischengeschalteten Verschiebevorrichtung angeordneten Halte- und Richtungswechselelementen ausgebildet ist, wie ebenfalls noch erläutert wird.

Die genannten Möglichkeiten können in Kombination oder einzeln zu einer Höhenverstellung der Höhe des Ballons 1 und der darunter angeordneten Last über dem Gelände G führen und genutzt werden.

In Figur 2 ist eine bevorzugte Ausgestaltung der Erfindung dargestellt. Diese bevorzugte Ausgestaltung der Erfindung kann bei allen Ballonkransystemen B eingesetzt werden.

Mindestens eines der Fesselseile F1, F2 (F3, F4) umfasst einen dehnbaren Bereich beziehungsweise ein dehnbares Element in einem vorgebbaren Bereich. Dieses dehnbare Element kann innerhalb der Fesselseile F1, F2 eingebaut sein oder sich auch zwischen den Ankern BA1, BA2, BA3, BA4 eines Bodenverankerungssystems und den Richtungswechselelementen H10, H20 (H30; H40 beziehungsweise R10, R20 (R30, R40) befinden.

Mit den Bezugszeichen BA1, BA2, BA3, BA4 werden in den Figuren 1 bis 9 nicht dargestellte Anker des Bodenverankerungssystems bezeichnet. Diese Anker BA1, BA2, BA3, BA4 verbinden jeweils die Halte- und Richtungswechselelemente H10, H20, H30, H40 oder R10, R20, R30, R40 oder die zwischengeschaltete Verschiebevorrichtung direkt mit dem Gelände G. Ruckartige Effekte beim Verfahren des Ballons 1, die in dem Seilsystem auftreten könnten, werden durch die Elastizität der dehnbaren Elemente vermieden, da die eingeleiteten Kräfte in Verformungsenergie umgewandelt werden, wodurch die ruckartigen Effekte kompensiert werden.

Die vorteilhafte Lösung, bei der sich die dehnbaren Elemente in den Fesselseilen F1, F2 befinden, ist anhand der Fesselseile F1, F2 dargestellt. Das dehnbare Element F1D beziehungsweise F2D bewirkt, dass eine Kraft (Pendeln) bei einer Krafteinleitung in die Fesselseile F1, F2 zunächst durch eine elastische Verformung der elastischen Elemente F1D, F2D aufgenommen wird, so dass ein Pendeln reduziert wird und ruckartige Bewegungen des Ballonkransystems B vermieden werden.

Die dehnbaren Elemente F1D, F2D verhindern somit in vorteilhafter Weise ruckartige Kraftwirkungen auf das erste Fesselseil F-X. Auf eine Darstellung der dehnbaren Elemente in dem zweiten Fesselseil F-Y wurde in den Figuren verzichtet.

Wenn im Nachfolgenden von einer Führung beziehungsweise Verlagerung des Ballons 1 gesprochen wird, so wird damit indirekt auch die Führung beziehungsweise Verlagerung der an dem Ballon 1 angehängten Last erläutert.

Über die zuvor beschriebene generelle Ausgestaltung eines Ballonkransystems B hinaus, werden nachfolgend verschiedene Ausführungsvarianten erläutert.

### Manuell bedienbares Ballonkransystem B2 (Typ II)

### Erste Ausführungsvariante - Figuren 1 bis 3:

Gemäß den Figuren 1 bis 3 ist in mindestens einer Raumrichtung eine zwischengeschaltete Verschiebevorrichtung ausgebildet, die eine beidseitige Führung des Ballons 1 in +/-x-Richtung und der damit an einem Ballon 1 befestigten Last in mindestens eine Raumrichtung erlaubt.

Das Ballonkransystem B2 umfasst eine Verschiebevorrichtung vom zweiten Typ II, die erfindungsgemäß derart ausgebildet ist, dass die antriebslosen und/oder angetriebenen Halte- und Richtungswechselelemente teilweise geländefest und teilweise auf/an einer zwischengeschalteten geländefesten Verschiebevorrichtung angeordnet sind.

In der ersten Ausführungsvariante erfolgt eine Verlagerung des Ballons 1 in die +/-x-Richtung und/oder in die +/-y-Richtung über die antriebslosen Halte- und Richtungswechselelemente H 10, H20 beziehungsweise die antriebslosen Halte- und Richtungswechselelemente H30, H40 manuell.

In der ersten Ausführungsvariante erlaubt die zwischengeschaltete Verschiebevorrichtung eine Führung in +/-x-Richtung. Die zwischengeschaltete Verschiebevorrichtung wird in der ersten Ausführungsvariante als antriebslose Verschiebevorrichtung Fi-x ausgestaltet.

In der ersten Ausführungsvariante sind die Fesselseile F1, F2 punktuell über die antriebslosen Halte- und Richtungswechselelemente H10, H20 indirekt mit dem Gelände G verbunden.

Die antriebslosen Halte- und Richtungswechselelemente H30, H40 der Fesselseile F3, F4, die für die Verlagerung des Ballons 1 in +/-y-Richtung zuständig sind, sitzen dabei an/auf der mit dem Gelände G direkt verbundenen zwischengeschalteten antriebslosen Verschiebevorrichtung Fi-x und sind somit ebenfalls indirekt mit dem Gelände G verbunden.

In bevorzugter Ausgestaltung der Erfindung sind in der ersten Ausführungsvariante alle Halteund Richtungswechselelemente H10, H20, H30, H40 Umlenkrollen. Die Umlenkrollen H30, H40 sind an/auf der geländeseitig befestigten zwischengeschalteten antriebslosen Verschiebevorrichtung Fi-x angeordnet und in +/-x-Richtung verschiebbar, während die Umlenkrollen H10, H20 stationär direkt auf dem Gelände G angeordnet sind.

In Gebrauchsposition ist beispielsweise eine Last an dem Lastmittel 60 befestigt.

Durch manuelles Schieben der Last in +/-x-Richtung (Figur 2) wird der Ballon 1 und die Last über das Fesselseil F-X über die Umlenkrollen H10, H20 und das erste untere Führungselement 51 geführt. Dabei verändert das Fesselseil F-X seine Position gegenüber dem ersten unteren Führungselement 51. Das Fesselseil F-X wird durch die geländeseitig stationär angeordneten Umlenkrollen H10, H20 umgelenkt. Die anderen Umlenkrollen H30, H40 werden dabei auf der zwischengeschalteten antriebslosen Verschiebevorrichtung Fi-x in +/-x-Richtung in Längsrichtung der Schienen des x-Schienenpaares Fi-x verschoben. Die antriebslose zwischengeschaltete Verschiebevorrichtung Fi-x ist beispielsweise ein x-Schienenpaar, wobei auf jeder Schiene ein so genannter Verschiebeläufer V angeordnet ist, der in +/-x-Richtung auf den Schienen läuft und gleichzeitig die Umlenkung des Fesselseiles F-X ermöglicht.

Durch manuelles Schieben der Last in +/-y-Richtung (Figur 1) wird der Ballon 1 und die Last über das Fesselseil F-Y über die Umlenkrollen H30, H40 und das zweite obere Führungselement 52 geführt. Dabei verändert das Fesselseil F-Y seine Position gegenüber dem zweiten oberen Führungselement 52. Das Fesselseil F-Y wird durch die auf den Schienen des x-Schienenpaares Fi-x angeordneten Umlenkrollen H30, H40 umgelenkt.

Erfindungsgemäß dient das x-Schienenpaar Fi-x als zwischengeschaltete Verschiebevorrichtung zu einer geführten Bewegung des Ballons 1 in die mindestens eine Raumrichtung x-Richtung. Durch manuelles Schieben der Last in +/-y-Richtung (Figur 1) wird der Ballon 1 und die Last über das Fesselseil F-Y über die Umlenkrollen H30, H40 somit zwischen den Schienen des x-Schienenpaares Fi-x in Querrichtung y zu den Schienen hin und her bewegt.

Beim Verfahren des Ballons 1 in +/-x-Richtung und/oder +/-y-Richtung kommt es durch die gezielte Veränderung der Teillängen des Fesselseiles F1 und F2 (F-X) relativ zu dem ersten unteren Führungselement 51 und/oder durch die gezielte Veränderung der Teillängen des Fesselseiles F3 und F4 (F-Y) relativ zu dem zweiten oberen Führungselement 52 automatisch zum Anheben oder Absenken des Ballons 1 und der Last in die dritte Raumrichtung z in +/- z-Richtung.

Das heißt, die Seillänge des Fesselseiles F1 und F2 (F-X) und des Fesselseiles F3 und F4 (F-Y) zwischen den jeweiligen Halte- und Richtungswechselelementen wird in Gebrauchsposition des Ballons 1 unter Berücksichtigung einer gewünschten Ausgangshöhe des Ballons 1, vorzugsweise zwischen dem Südpol des Ballons 1 und dem Gelänge G festgelegt. Die Seillänge des Fesselseiles F1 und F2 (F-X) und des Fesselseiles F3 und F4 (F-Y) ändert sich dann nicht mehr.

Beim Verziehen der Fesselseile F1 und F2 (F-X); F3 und F4 (F-Y) verändert sich die jeweilige Teillänge des Fesselseiles F1 gegenüber F2 beziehungsweise F3 gegenüber F4 relativ zu dem jeweiligen Führungselement 51, 52. Der Ballon 1 wird somit ausgehend von der gewünschten eingestellten Ausgangshöhe in die eine oder anderen Richtung +/-x-Richtung beziehungsweise +/-y-Richtung zu dem jeweiligen Halte- und Richtungswechselelement verlagert und in Abhängigkeit des Abstandes der Halte- und Richtungswechselelement vertikal in +/-z-Richtung verlagert. Mit anderen Worten der Abstand des Ballons 1 beziehungsweise der Last zwischen dem Gelände G verringert sich in -z-Richtung oder vergrößert sich in +z-Richtung, während gleichzeitig die Verlagerung in +/-x-Richtung bzw. +/-y-Richtung stattfindet.

### Automatisch bedienbares Ballonkransystem B2 (Typ II)

### Zweite Ausführungsvariante - Figuren 1 bis 3:

Bei der zweiten Ausführungsvariante erfolgt eine Verlagerung des Ballons 1 in die +/-x-Richtung und/oder in die +/-y-Richtung jetzt über angetriebene Halte- und Richtungswechselelemente R10, R20 in +/-x-Richtung beziehungsweise über angetriebene Halte- und Richtungswechselelemente R30, R40 in +/-y-Richtung automatisch.

Es wird jetzt durch angetriebenes Führen des Fesselseiles F-X in +/-x-Richtung (Figur 2) dafür gesorgt, dass der Ballon 1 und die Last über das Fesselseil F-X über mindestens ein angetriebenes Halte- und Richtungswechselelement R10 und/oder R20 und das erste untere Führungselement 51 geführt wird. Dabei verändert das Fesselseil F-X seine Position gegenüber dem ersten unteren Führungselement 51. Das Fesselseil F-X wird innerhalb der geländeseitig stationär angeordneten Halte- und Richtungswechselelemente R10, R20 entsprechend umgelenkt und verlagert.

Mindestens eines der anderen Halte- und Richtungswechselelemente R30 und/oder R40 wird ebenfalls als angetriebenes Halte- und Richtungswechselelement ausgebildet. Sie sind weiterhin auf der zwischengeschalteten antriebslosen Verschiebevorrichtung Fi-x in +/-x-Richtung in Längsrichtung der Schienen des x-Schienenpaares Fi-x verschiebbar angeordnet. Die antriebslose zwischengeschaltete Verschiebevorrichtung Fi-x ist beispielsweise wieder ein x-Schienenpaar, wobei jetzt auf jeder Schiene ein so genannter Verschiebeläufer V mit integrierten Halteund Richtungswechselelementen für die Verlagerung in +/-y-Richtung angeordnet ist, der in +/x-Richtung auf den Schienen läuft und gleichzeitig die Umlenkung des Fesselseiles F-X ermöglicht.

Mindestens einer der Verschiebeläufer V ist jetzt ein Verschiebeläufer mit Richtungswechsler der automatisch entlang des x-Schienenpaares auf den Schienen für die eine oder andere Richtung +/-x-Richtung läuft.

Durch angetriebenes Führen des Fesselseiles F-Y wird der Ballon 1 und die Last zudem in +/-y-Richtung über die Halte- und Richtungswechselelemente R30, R40 und das zweite obere Führungselement 52 verlagert. Dabei verändert das Fesselseil F-Y seine Position gegenüber dem zweiten oberen Führungselement 52 analog. Das Fesselseil F-Y wird durch die auf den Schienen des x-Schienenpaares Fi-x angeordneten Halte- und Richtungswechselelement R30, R40 umgelenkt.

Erfindungsgemäß dient das x-Schienenpaar Fi-x als zwischengeschaltete Verschiebevorrichtung in Längsrichtung der Schienen zu einer geführten Bewegung des Ballons 1 in die mindestens eine Raumrichtung x-Richtung, sobald eine automatische Betätigung des Fesselseiles F-X erfolgt.

Durch automatische Betätigung des Fesselseiles F-Y erfolgt eine Bewegung des Ballons 1 und der Last in +/-y-Richtung (Figur 1), so dass der Ballon 1 und die Last über das Fesselseil F-Y über die Halte- und Richtungswechselelemente R30, R40 zwischen den Schienen des x-Schienenpaares Fi-x in Querrichtung y zu den Schienen hin und her bewegt wird.

Wie erwähnt kommt es beim Verfahren des Ballons 1 in +/-x-Richtung und/oder +/-y-Richtung durch die gezielte Veränderung (s.o) der Teillängen des Fesselseiles F1 und F2 (F-X) relativ zu dem ersten unteren Führungselement 51 und/oder durch die gezielte Veränderung der Teillängen des Fesselseiles F3 und F4 (F-Y) relativ zu dem oberen zweiten oberen Führungselement 52 gleichzeitig zum Anheben oder Absenken des Ballons 1 und der Last in die dritte Raumrichtung z in +/- z-Richtung .

Das heißt, die Seillänge des Fesselseiles F1 und F2 (F-X) und des Fesselseiles F3 und F4 (F-Y) zwischen den jeweiligen Halte- und Richtungswechselelementen wird in Gebrauchsposition des Ballons 1 unter Berücksichtigung einer gewünschten Ausgangshöhe des Ballons 1, vorzugsweise zwischen dem Südpol des Ballons 1 und dem Gelände G festgelegt. Die Seillänge des Fesselseiles F1 und F2 (F-X) und des Fesselseiles F3 und F4 (F-Y) ändert sich dann nicht mehr.

Beim Verziehen der Fesselseile F1 und F2 (F-X); F3 und F4 (F-Y) verändert sich die jeweilige Teillänge des Fesselseiles F1 gegenüber F2 beziehungsweise F3 gegenüber F4 relativ zu dem jeweiligen Führungselement 51, 52. Der Ballon 1 wird somit ausgehend von der gewünschten eingestellten Ausgangshöhe in die eine oder anderen Richtung +/-x-Richtung beziehungsweise +/-y-Richtung zu dem jeweiligen Halte- und Richtungswechselelement verlagert und in Abhängigkeit des Abstandes der Halte- und Richtungswechselelement in +/-z-Richtung verlagert. Mit anderen Worten der Abstand des Ballons 1 beziehungsweise der Last zwischen dem Gelände G verringert sich in -z-Richtung oder vergrößert sich in +z-Richtung, während gleichzeitig die Verlagerung in +/-x-Richtung beziehungsweise +/-y-Richtung stattfindet.

In der zweiten Ausführungsvariante werden als Halte- und Richtungswechselelemente beispielsweise Spillwinden eingesetzt, wobei die angetriebenen Halte- und Richtungswechselelemente bezüglich eines Fesselseiles F-X, F-Y zumindest einseitig oder beidseitig anordbar sind.

### Manuell bedienbares Ballonkransystem B3 (Typ III)

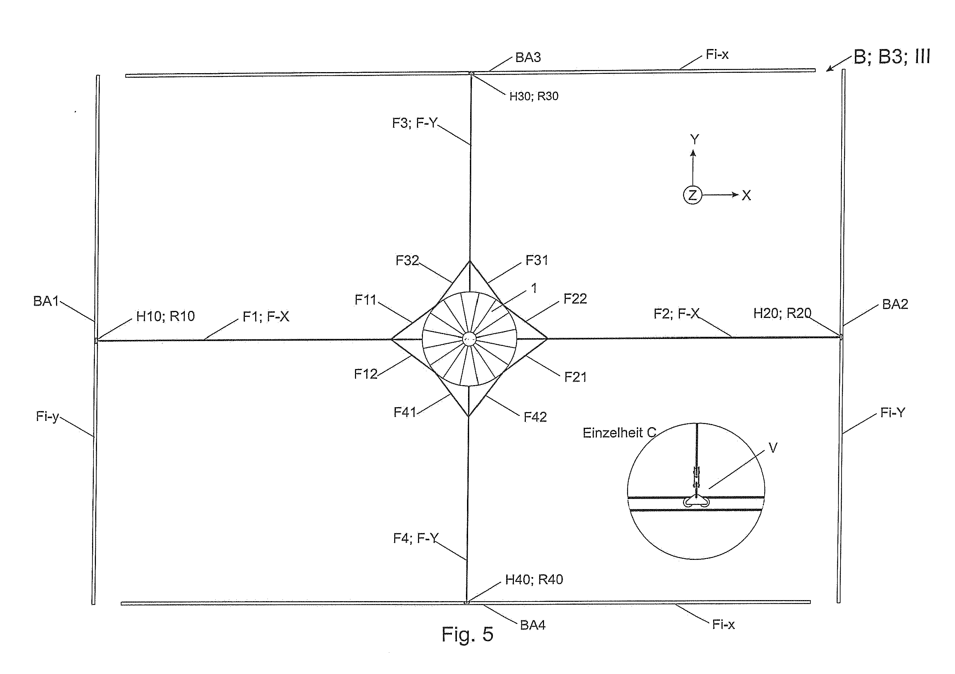

### Dritte Ausführungsvariante - Figur 4 und 5:

Die Erfindung umfasst eine dritte Ausführungsvariante. Gemäß den Figuren 4 und 5 ist das Ballonkransystem B im Unterschied zu der ersten Ausführungsvariante mit einer zwischengeschalteten Verschiebevorrichtung ausgebildet, die eine beidseitige Führung des Ballons 1 und der damit an dem Ballon 1 befestigten Last in zwei Raumrichtungen erlaubt. Dieses Ballonkransystem B3 umfasst eine Verschiebevorrichtung vom Typ III, die erfindungsgemäß derart ausgebildet ist, dass die antriebslosen und/oder angetriebenen Halte- und Richtungswechselelemente ausschließlich auf mindestens einer zwischengeschalteten geländefesten Verschiebevorrichtung angeordnet sind. In der dritten Ausführungsvariante erfolgt eine Verlagerung des Ballons 1 in die +/-x-Richtung über die antriebslosen Halte- und Richtungswechselelemente H10, H20, H30, H40.

In der dritten Ausführungsvariante sind die Fesselseile F1, F2 und die Fesselseile F3, F4 jeweils an/auf geländeseitig befestigten zwischengeschalteten antriebslosen Verschiebevorrichtungen Fi-x angeordnet, so dass die Halte- und Richtungswechselelemente H10, H20 relativ zu der zwischengeschalteten antriebslosen Verschiebevorrichtung Fi-y in +/-y-Richtung und die Halteund Richtungswechselelement H30, H40 relativ zu der zwischengeschalteten antriebslosen Verschiebevorrichtung Fi-x in +/-x-Richtung verlagerbar sind.

In bevorzugter Ausgestaltung der Erfindung sind in der dritten Ausführungsvariante alle Halte- und Richtungswechselelemente H10, H20, H30, H40 Umlenkrollen.

In bevorzugter Ausgestaltung der Erfindung sind in der dritten Ausführungsvariante die zwischengeschalteten antriebslosen Verschiebevorrichtungen Fi-x analog zu der ersten Ausführungsvariante bevorzugt orthogonal zueinander angeordnete x-Schienenpaare und y-Schienenpaare. Insbesondere sichtbar in Figur 5.

Die Schienen jedes x- und y-Schienenpaares liegen sich parallel in einem vorgebbaren Abstand auf dem Gelände G innerhalb einer gedachten horizontalen oder schrägen x/y-Ebene gegenüber und bilden somit für das Ballonkransystem B die Grenzen für eine Arbeitsfläche, auf der mit dem Ballonkransystem B entsprechende Lasten umsetzbar sind.

Die Verlagerung des Ballons 1 erfolgt analog zu der ersten Ausführungsvariante durch manuelles Schieben der Last.

Durch manuelles Schieben der Last in +/-x-Richtung (Figuren 4 und 5) wird der Ballon 1 und die Last über das Fesselseil F-X über die Umlenkrollen H10, H20 und das erste untere Führungselement 51 geführt, welches in der Einzelheit A vergrößert dargestellt ist. Dabei verändert das Fesselseil F-X seine Position gegenüber dem ersten unteren Führungselement 51.

Das Fesselseil F-X wird jetzt weiterhin, wie bei der ersten Ausführungsvariante durch Umlenkrollen H10, H20 umgelenkt, jedoch sind diese Umlenkrollen H10, H20 jetzt nicht mehr stationär geländeseitig angeordnet, sondern sind als Verschiebeläufer V an/auf der zwischengeschalteten antriebslosen Verschiebevorrichtung Fi-y, den in y-Richtung ausgerichteten Schienen des ySchienenpaares angeordnet. Der Verschiebeläufer V läuft in +/-y-Richtung auf den Schienen und sorgt gleichzeitig für die Umlenkung des Fesselseiles F-X.

Die anderen Umlenkrollen H30, H40 werden wie in der ersten Ausführungsvariante auf der zwischengeschalteten antriebslosen Verschiebevorrichtung Fi-x in +/-x-Richtung in Längsrichtung der Schienen des x-Schienenpaares Fi-x verschoben. Die antriebslose zwischengeschaltete Verschiebevorrichtung Fi-x ist beispielsweise ein x-Schienenpaar, wobei auf jeder Schiene ein so genannter Verschiebeläufer V angeordnet ist, der in +/-x-Richtung auf den Schienen läuft und gleichzeitig die Umlenkung des Fesselseiles F-Y ermöglicht.

Der Verschiebeläufer V ist in Figur 5, Einzelheit C schematisch dargestellt. Es wird deutlich, dass Laufrollen in einer der Schienen des x-Schienenpaares laufen und um 90° versetzt dazu die Umlenkrolle an den Rollen angeordnet ist, so dass eine Umlenkung des Fesselseiles F-Y in +/-y-Richtung und eine Verschiebung des Fesselseiles F-Y in Längsrichtung in +/-x-Richtung möglich ist.

Durch manuelles Schieben der Last in +/-y-Richtung (Figur 1) wird der Ballon 1 und die Last über das Fesselseil F-Y über die Umlenkrollen H30, H40 und das zweite obere Führungselement 52 geführt. Dabei verändert das Fesselseil F-Y seine Position gegenüber dem zweiten oberen Führungselement 52. Das Fesselseil F-Y wird durch die auf den Schienen des x-Schienenpaares Fi-x angeordneten Umlenkrollen H30, H40 umgelenkt, wobei die Umlenkrollen H30, H40 als Verschiebeläufer V ausgebildet sind, die in +/-x-Richtung auf den Schienen des x-Schienenpaares Fi-x laufen.

Erfindungsgemäß bewirken die x- und y-Schienenpaare als zwischengeschaltete Verschiebevorrichtung eine geführte Bewegung des Ballons 1 in die beiden Raumrichtungen x, y. Durch manuelles Schieben der Last in +/-y-Richtung (Figur 1) wird der Ballon 1 und die Last über die Fesselseile F-X und F-Y über die Umlenkrollen H10, H20 und H30, H40 zwischen den Schienen des x-Schienenpaares in Querrichtung y und zwischen den Schienen des y-Schienenpaares in Längsrichtung hin und her bewegt, wobei in Abhängigkeit der Lage des Ballons 1 innerhalb der Arbeitsfläche auf dem Gelände G gleichzeitig eine unterschiedlich stark ausgeprägte Bewegung des Ballons in +/- z-Richtung erfolgt.

Eine besondere Ausgestaltung zeigt Figur 4, Einzelheit B. Diese besondere Ausgestaltung ist auf alle vorhergehenden Ausführungsvarianten und auf die nachfolgenden fünfte bis achte Ausführungsvariante übertragbar. In der ersten bis achten Ausführungsvariante wird stets davon ausgegangen, dass die antriebslosen Halte- und Richtungswechselelemente H10, H20, H30, H40 beziehungsweise angetriebenen Halte- und Richtungswechselelemente R10, R20, R30, R40 geländenah oder nah an der zwischengeschalteten Verschiebevorrichtung angeordnet sind.

Es besteht aber auch in der besonderen Ausgestaltung gemäß Figur 4, Einzelheit B die Möglichkeit, das jeweilige Fesselseil F1, F2 (F-X); F3, F4 (F-Y) je nach Ausführungsvariante über ein Höhenverstellelement F1-H, F2-H in einem Abstand von dem antriebslosen jeweiligen Halte- und Richtungswechselelement H10, H20, H30, H40 beziehungsweise angetriebenen Halte- und Richtungswechselelement R10, R20, R30, R40 unter Zwischenschaltung eines Höhenverstellelementes F1-H, F2-H auszubilden. Dadurch ergibt sich neben der ersten und zweiten Möglichkeit zur Höhenverstellung des Ballons 1 und der Last eine dritte Möglichkeit die Höhe des Ballons 1 zu beeinflussen.

Das jeweilige Fesselseil F1, F2 (F-X); F3, F4 (F-Y) umfasst (dargestellt anhand des Fesselseiles F1, F2 (F-X)) beispielsweise eine weitere Umlenkrolle H 100, H200 je Fesselseil F1, F2. Die Höhenverstellelemente F1-H, F2-H sind zwischen der weiteren zusätzlichen Umlenkrolle H100, H200 des Fesselseiles F1, F2 (F-X) und den antriebslosen jeweiligen Halte- und Richtungswechselelementen H10, H20 angeordnet, welche in der beispielhaft für die anderen Ausführungsvarianten geltenden dritten Ausführungsvariante der Figur 4 direkt auf der zwischengeschalteten Verschiebevorrichtung Fi-y dem y-Schienenpaar angeordnet sind. Durch einseitiges oder beidseitiges Verkürzen oder Verlängern des Höhenverstellelementes F1-H, F2-H kann der Ballon 1 in +/-z-Richtung höhenverstellt werden. Die zuvor beschriebenen Funktionen sind unabhängig von dieser besonderen Ausgestaltung ausführbar. Die Höhenverstellung über die zwischengeschalteten Höhenverstellelemente F1-H, F2-H stellt eine dritte Möglichkeit dar, die Höhe des Ballons 1 gegenüber dem Gelände G zu verstellen, wodurch der Ballon 1 des Ballonkransystems B2, B3 vom zweiten und dritten Typ in einfacher Weise noch besser höhenjustierbar zu machen. Diese Höhenverstellmöglichkeit hat insbesondere den Vorteil, dass die Höhe das Ballons 1 über dem Gelände G nicht in Abhängigkeit der veränderlichen Lage des Ballons 1 innerhalb der Arbeitsfläche erfolgt, wenn der Ballon 1 in die +/x-Richtung und/oder in die +/-y-Richtung verlagert wird. Es wurde bereits erläutert, dass der Ballon 1, wenn er in die +/-x-Richtung und/oder +/-y-Richtung verlagert wird, gleichzeitig eine unterschiedlich stark ausgeprägte Bewegung in +/- z-Richtung ausführt. Diese Höhenänderung des Ballons 1 kann jetzt in Kombination mit der Höhenverstellung mittels der Höhenverstellelemente F1-H, F2-H ausgeführt werden, so dass Höhenänderungen, die sich durch die Verlagerung des Ballons 1 in +/-x-Richtung und/oder +/-y-Richtung automatisch ergeben, durch die Höhenverstellung mittels der Höhenverstellelemente F1-H, F2-H verstärkt oder reduziert werden können. Die Verstellung mittels der Höhenverstellelemente F1-H, F2-H kann wiederum manuell oder automatisch erfolgen.

### Automatisch bedienbares Ballonkransystem B3 (Typ III)

### Vierte Ausführungsvariante - Figur 4 und 5:

Bei der vierten Ausführungsvariante erfolgt eine Verlagerung des Ballons 1 in die +/-x-Richtung und/oder in die +/-y-Richtung jetzt analog zu der zweiten Ausführungsvariante über angetriebene Halte- und Richtungswechselelemente R10, R20 in +/-x-Richtung beziehungsweise über angetriebene Halte- und Richtungswechselelemente R30, R40 in +/-y-Richtung automatisch.

Der Unterschied zur dritten Ausführungsvariante besteht insbesondere darin, dass die Halte- und Richtungswechselelemente R10, R20, R30; R40 angetrieben und beispielsweise Spillwinden sind, wobei die Halte- und Richtungswechselelemente bezüglich eines Fesselseiles F-X, F-Y zumindest einseitig oder beidseitig anordbar sind. Die Spillwinden sorgen für ein Umlenken und Verziehen des jeweiligen Fesselseiles F-X, F-Y. Die Spillwinden sind an/auf den Schienen des jeweiligen Schienenpaares in +/-x-Richtung beziehungsweise +/-y-Richtung verschieblich angeordnet.

Erfindungsgemäß bewirken die x- und y-Schienenpaare als zwischengeschaltete Verschiebevorrichtung eine geführte Bewegung des Ballons 1 in die beiden Raumrichtungen x, y. Durch automatisches Verschieben der Last in +/-y-Richtung (Figur 1) wird der Ballon 1 und die Last über die Fesselseile F-X und F-Y über die Umlenkrollen R10, R20 und R30, R40 zwischen den Schienen des x-Schienenpaares in Querrichtung y und zwischen den Schienen des y-Schienenpaares in Längsrichtung hin und her bewegt, wobei in Abhängigkeit der Lage des Ballons 1 innerhalb der Arbeitsfläche auf dem Gelände G gleichzeitig eine unterschiedlich stark ausgeprägte Bewegung des Ballons in +/- z-Richtung erfolgt.

### Manuell bedienbares Ballonkransystem B3 (Typ III)

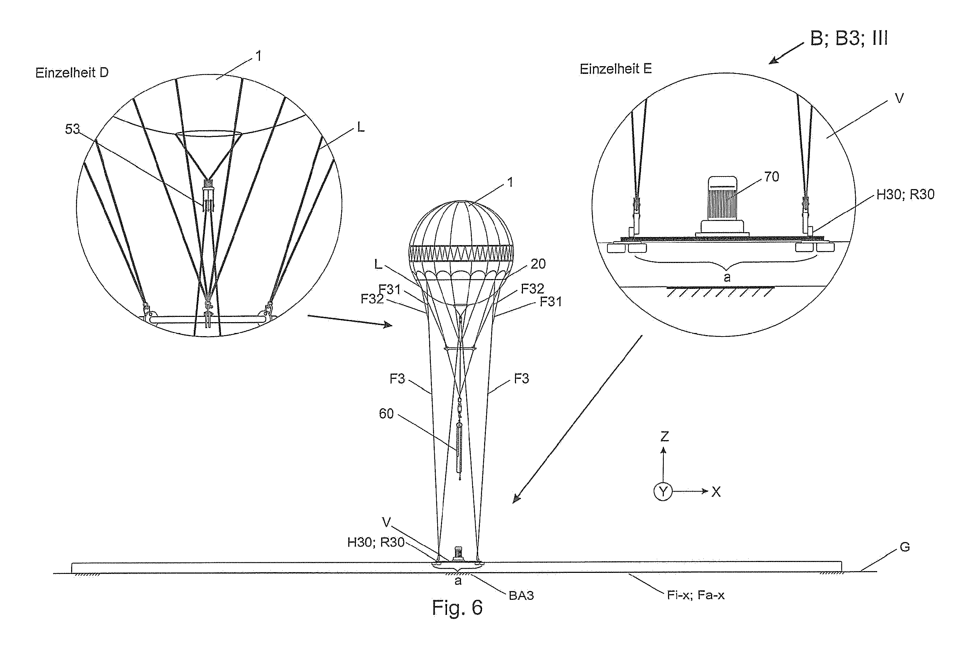

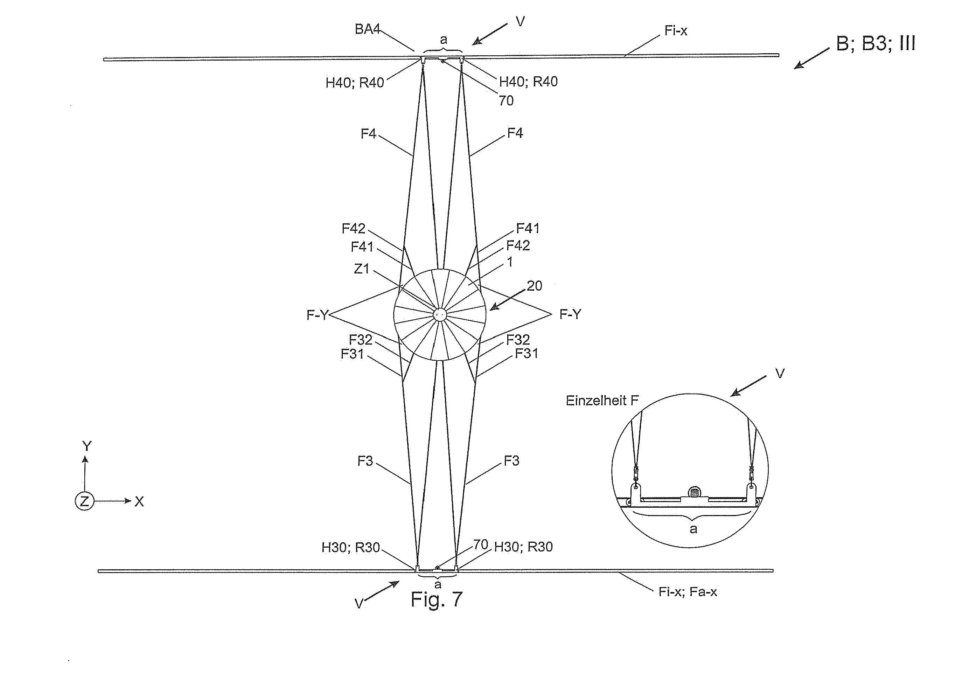

### Fünfte Ausführungsvariante - Figur 6 und 7:

Dieses Ballonkransystem B3 umfasst ebenfalls eine Verschiebevorrichtung vom Typ III, die erfindungsgemäß derart ausgebildet ist, dass die antriebslosen und/oder angetriebenen Halte- und Richtungswechselelemente ausschließlich auf mindestens einer zwischengeschalteten geländefesten Verschiebevorrichtung angeordnet sind.

In der fünften Ausführungsvariante erfolgt eine Verlagerung des Ballons 1, wie in einer Zusammenschau aus den Figuren 6 und 7 hervorgeht, in die +/-x-Richtung im Unterschied zu Figur 3 nicht mehr über antriebslose H10, H20 oder angetriebene R10, R20 Halte- und Richtungswechselelemente. Die Verlagerung des Ballons in +/-x-Richtung erfolgt auf andere Weise. Die Figuren 6 und 7 machen deutlich, dass in dieser Ausführungsvariante keine Umlenkrollen H10, H20 oder Spillwinden R10, R20 zur Verlagerung des Ballons 1 in +/-x-Richtung stationär angeordnet und direkt mit dem Gelände G verbunden sind.

Die Verlagerung des Ballons 1 in die beiden Raumrichtungen x, y erfolgt in dieser Ausführungsvariante folgendermaßen:
Wie bisher ist in der fünften Ausführungsvariante die zwischengeschaltete antriebslose Verschiebevorrichtung Fi-x beispielhaft als x-Schienenpaar mit je einer Schiene ausgestaltet.

Dadurch, dass der Ballon 1 nunmehr nicht mehr in +/-x-Richtung über ein Fesselseil F-X gehalten und geführt wird, wird auf andere Weise dafür gesorgt, dass Pendelbewegungen des Ballons 1 reduziert werden.

Der Ballon 1 wird jetzt über zwei in y-Richtung verlaufende Fesselseile F-Y und F-Y auf der zwischengeschalteten antriebslosen Verschiebevorrichtung Fi-x gefesselt.

Die beiden Fesselseile F-Y sind wie bisher jeweils aus den Fesselseilen F3, F4 als verbundene durchgehende Fesselseile F-Y gebildet, die vorzugsweise beidseitig von dem Ösenkranzband 20 abgehen, wobei vorzugsweise Gabelseile ausgebildet sind, um den Ballon 1 umfangsseitig an mehreren Anbindungspunkten zu halten beziehungsweise zu fesseln. Die Gabelseile F31, F32 und F41, F42 der Fesselseile F3 und F4 sind in den Figuren 6 und 7 andeutungsweise dargestellt.

Erfindungsgemäß wird sichtbar, dass die Gabelseile F31, F32 und F41, F42 und damit die je zwei Fesselseile F3 und F4 jeweils umfangsseitig im Wesentlichen an einem Viertel des durch das Ösenkranzband 20 am Ballon 1 gebildeten Kreisbogens angeordnet sind.

Der Ballon 1 ist dadurch umfangsseitig an je einem Viertel in y-Richtung gegenüberliegend am Ösenkranzband 20 mehrfach gefesselt, wobei die Krafteinleitung über die vier Fesselseile - zwei mal Fesselseil F3 und zwei mal Fesselseil F4 - in die antriebslosen Halte- und Richtungswechselelemente H10, H20 eingeleitet wird.

Bei diesem Ballonkransystem B3 bilden zwei Fesselseile F3, F4 ein Fesselseil F-Y in y-Richtung. Zwei weitere Fesselseile F3, F4 bilden ein weiteres Fesselseil F-Y aus, welches ebenfalls in y-Richtung verläuft.

Die beiden Fesselseile F-Y werden, wie in Figur 6, Einzelheit D gezeigt ist, über ein Führungselement 53 in der Art einer Umlenkrolle mit Doppelführung für jedes der beiden Fesselseile F-Y über den Südpol des Ballons 1 geführt.

Wie bisher sind antriebslose Halte- und Richtungswechselelemente H30, H40 paarweise ausgebildet, die in x-Richtung in einem Abstand a zueinander beabstandet sind, so dass vorgebbar ist, in welche Richtung die vektorielle Krafteinleitung über die vier Fesselseile zwei mal F3 und zwei mal F4 in die zwischengeschaltete antriebslose Verschiebevorrichtung Fi-x erfolgen soll.

Durch Vergrößerung des Abstandes a ist es möglich, die Pendelbewegung zu beeinflussen, wobei eine Vergrößerung des Abstandes a eine Verringerung der Pendelneigung zur Folge hat.

In der soeben erläuterten fünften Ausführungsvariante erfolgt die Verlagerung manuell.

Die paarweise angeordneten antriebslosen Halte- und Richtungswechselelemente H30, H40 in +/-y-Richtung der Art von Umlenkrollen sind an/auf der antriebslosen Verschiebevorrichtung Fix, insbesondere an auf je einer Schiene des Schienenpaares auf je einem Verschiebeläufer V gegenüberliegend mit dem Abstand a angeordnet.

Der in Figur 6, insbesondere Einzelheit D und Figur 7, insbesondere Einzelheit F gezeigte Antrieb 70 gehört innerhalb des Ballonkransystems B3 zu einer sechsten Ausführungsvariante, die nachfolgend erläutert wird.

### Automatisch bedienbares Ballonkransystem B3 (Typ III)

### Sechste Ausführungsvariante - Figur 6 und 7:

In der sechsten Ausführungsvariante wird ausgehend von der zuvor erläuterten fünften Ausführungsvariante eine zwischengeschaltete angetriebene Verschiebevorrichtung Fa-x ausgebildet, die beispielhaft als x-Schienenpaar mit je einer Schiene in x-Richtung verlaufend ausgestaltet ist.

An/auf je einer Schiene des Schienenpaares der Verschiebevorrichtung Fa-x sitzt einer der erläuterten Verschiebeläufer V mit antriebslosen Halte- und Richtungswechselelementen H30, H40 oder wahlweisen angetriebenen Halte- und Richtungswechselelementen R30, R40.

Der Verschiebeläufer V umfasst den Antrieb 70 (Figur 6, Einzelheit D und Figur 7, Einzelheit F), mittels dessen der jeweilige Verschiebeläufer V auf der jeweiligen Schiene des Schienenpaares der Verschiebevorrichtung Fa-x in +/-x-Richtung verfahrbar ist. Durch den Antrieb 70 wird die Verschiebevorrichtung Fa-x, insbesondere die jeweiligen x-Schienen des Schienenpaares zu einer automatisch angetriebenen Verschiebevorrichtung Fa-x.

Durch das automatische angetriebene Verschieben wird der Ballon 1 beziehungsweise die zugehörige Last in +/-x-Richtung verfahren.

Die Verlagerung des Ballons 1 beziehungsweise der zugehörigen Last in +/-y-Richtung quer zur +/-x-Richtung erfolgt je nach Ausstattung manuell über die antriebslosen Halte- und Richtungswechselelemente H30, H40 (Umlenkrollen) oder angetrieben mittels der angetriebenen R30, R40 Halte- und Richtungswechselelemente (Spillwinden). Dazu wurde in den vorhergehenden Ausführungsvarianten bereits detailliert ausgeführt.

Manuell und automatisch oder nur automatisch bedienbares Ballonkransystem B3 (Typ III).

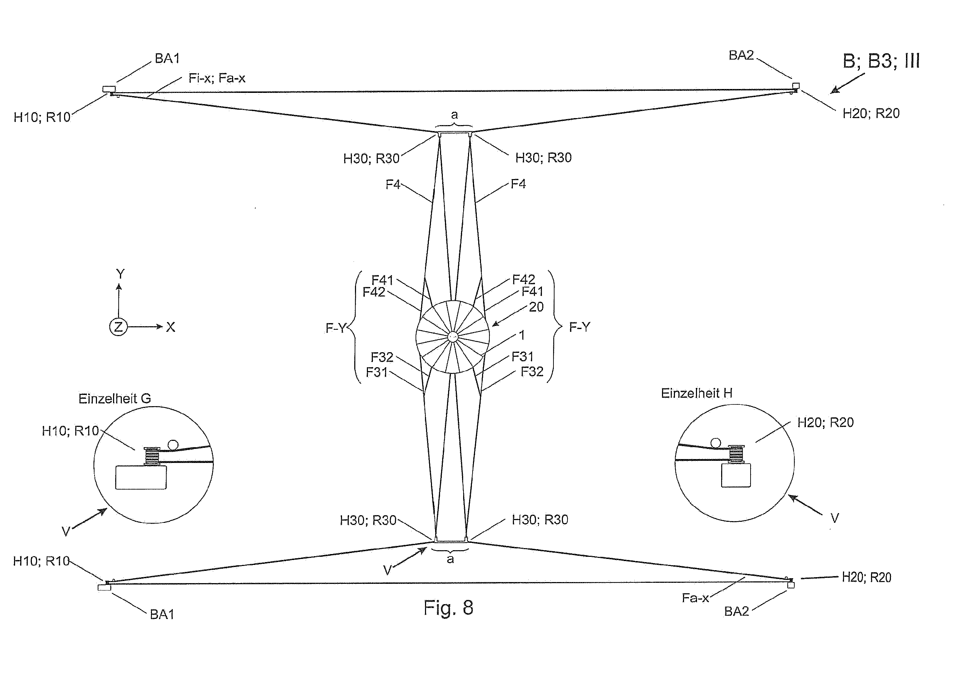

### Siebente Ausführungsvariante - Figur 8:

Das Ballonkransystem B3 der siebenten Ausführungsvariante umfasst ebenfalls eine Verschiebevorrichtung vom dritten Typ III, die erfindungsgemäß derart ausgebildet ist, dass die antriebslosen und/oder angetriebenen Halte- und Richtungswechselelemente ausschließlich auf/an einer zwischengeschalteten geländefesten Verschiebevorrichtung angeordnet sind.

In der siebenten Ausführungsvariante wird statt eines Schienensystems eine zwischengeschaltete antriebslose oder angetriebene Verschiebevorrichtung Fi-xi, Fa-x eingesetzt, die wie dargestellt ist als Seilzuganlage mit zwei parallelen in x-Richtung verlaufenden umlaufenden Seilen ausgebildet ist.

Die Draufsicht in Figur 8 soll anders als dargestellt verdeutlichen, dass das jeweilige umlaufende Seil zwischen den Halte- und Richtungswechselelementen in der x/z-Ebene liegt, das heißt, das zwischen den Halte- und Richtungswechselelementen H10, H20; R10, R20 umlaufende Seil liegt in einer vertikalen Ebene und nicht in einer horizontalen Ebene.

Eine Seilzuganlage als zwischengeschaltete Verschiebevorrichtung Fi-x, Fa-x erlaubt gegenüber einem Schienensystem eine höhere Flexibilität in Bezug auf die Anordnung auf einem Gelände G, insbesondere wenn Höhenunterschiede überwunden werden müssen.

An einem zwischen zwei antriebslosen Halte- und Richtungswechselelementen H10, H20 oder mindestens einem angetriebenen Halte- und Richtungswechselelement R10, R20 angeordnetes Seil der Seilzuganlage ist ein seilfester Verschiebeläufer V angeordnet.

Der Verschiebeläufer V umfasst in dieser siebenten Ausführungsvariante keinen eigenen Antrieb 70, wie beispielsweise in der beschriebenen Ausgestaltung der sechsten Ausführungsvariante.

An dem seilfesten Verschiebeläufer V wiederum sind entweder antriebslose Halte- und Richtungswechselelemente H30, H40 oder angetriebene Halte- und Richtungswechselelemente R30, R40 angeordnet, die wie bereits erläutert wurde eine manuelle oder automatische Verlagerung des Ballons 1 in +/-y-Richtung quer zur x-Richtung erlauben.

Wenn die Halte- und Richtungswechselelemente H10, H20 antriebslos, insbesondere Umlenkrollen sind, kann der Ballon 1 über die jeweilige Seilzuganlage manuell über das Umlaufen des Seiles um die Halte- und Richtungswechselelemente H10, H20 verlagert werden.

Die zwischengeschaltete Verschiebevorrichtung Fi-x in +/-x-Richtung ist somit antriebslos und nur zur manuellen Bedienung vorgesehen.

Wenn mindestens eines der Halte- und Richtungswechselelemente R10, R20 für die Verlagerung in +/-x-Richtung angetrieben ist, kann der Ballon 1 über die jeweilige Seilzuganlage automatisch über das Umlaufen des Seiles um die Halte- und Richtungswechselelemente R10, R20 verlagert werden. Der jeweilige Verschiebeläufer V ist dadurch mittels der Verschiebevorrichtung Fi-x in +/-x-Richtung verfahrbar, indem mindestens eine Spillwinde oder mindestens eine Trommelwinde der zwischengeschalteten Verschiebevorrichtung Fa-x das Seil in +/-x-Richtung verzieht und so den fest auf dem Seil angeordneten Verschiebeläufer V in +/-x-Richtung verfährt.

Die Verlagerung des Ballons 1 beziehungsweise der zugehörigen Last in +/-y-Richtung erfolgt zusammenfassend je nach Ausstattung über die antriebslosen Halte- und Richtungswechselelemente H30, H40 über eine zwischengeschaltete Verschiebevorrichtung Fi-x in x-Richtung manuell oder über eine zwischengeschaltete Verschiebevorrichtung in x-Richtung Fa-x automatisch.

Insofern ergeben sich wiederum verschiedene Ballonkransysteme B3, welche in Kombination manuell in +/-y-Richtung und automatisch in +-x-Richtung oder nur automatisch in +/-x-Richtung und +/-y-Richtung bedienbar sind, je nachdem ob die Halte- und Richtungswechselelemente manuell und/oder automatisch bedienbar sind.

Die Figur 8, Einzelheiten G und H zeigen jeweils eine angetriebene Spill- oder Trommelwinde als Halte- und Richtungswechselelemente R10, R20 der parallel angeordneten Seilzuganlagen.

Eine weitere Ausgestaltung ist vorgesehen, bei der das zwischen den Halte- und Richtungswechselelementen in +/-x-Richtung angeordnete Seil nicht umlaufend ist. Die Ausgestaltung ist in Figur 8 nicht dargestellt. In dieser Ausgestaltung kann der Ballon 1 nicht mehr manuell sondern nur noch über vier Halte- und Richtungswechselelemente R10, R20, je zwei pro Seilzuganlage, verlagert werden, indem das zwischen den Halte- und Richtungswechselelementen R10, R20 angeordnete Seil in die eine oder anderen Richtung +/-x-Richtung verzogen wird. Das heißt, das Seil wird beispielsweise an einem Halte- und Richtungswechselelement R10 eingewickelt und an dem anderen gegenüber liegenden Halte- und Richtungswechselelement R20 abgewickelt, während die Auftriebskraft des Ballons 1, das seil in +z-Richtung straff zieht. Dadurch wird der fest mit dem Seil verbundene Verschiebeläufer V ebenfalls automatisch in die eine oder andere +/-x-Richtung verlagert und der Ballon 1 durch die zwischengeschaltete Verschiebevorrichtung Fa-x verfahren. Hierdurch tritt der Effekt ein, dass der Ballon 1 bei der Verlagerung des Verschiebeläufers V in die eine oder andere +/-x-Richtung gleichzeitig vertikal in +/z-Richtung verlagert wird, da der seilfeste Verschiebeläufer V und damit der Ballon 1 zu dem jeweiligen Halte- und Richtungswechselelement R10, 20 verlagert wird und so nach unten in -z-Richtung zum Gelände beziehungsweise umgekehrt nach oben vom Gelände weg in +z-Richtung läuft.

### Automatisch bedienbares Ballonkransystem B1 (Typ I)

### Achte Ausführungsvariante - Figur 9:

Das Ballonkransystem B1 umfasst eine Verschiebevorrichtung vom ersten Typ I, die erfindungsgemäß derart ausgebildet ist, dass die antriebslosen und/oder angetriebenen Halte- und Richtungswechselelemente (ohne zwischengeschaltete Verschiebevorrichtung) ausschließlich geländefest angeordnet sind. Siehe beispielsweise Figur 9.

Die Fesselseile F1, F2, F3, F4 sind in dieser Ausführungsvariante ferner nicht über Führungselemente am Südpol des Ballons 1 geführt, sondern greifen über die Gabelseile an dem Ösenkranzband 20 an, ohne das die Fesselseile F1, F2, F3, F4 an Führungselemente am Südpol geführt und über die Halte- und Richtungswechselelemente umgelenkt werden.

In der achten Ausführungsvariante ist das Ballonkransystem B1 aus Fesselseilen F1, F2; F3, F4 ausgestaltet, die sternförmig angeordnet sind und eine sternförmige Seilzuganlage ausbilden.

In der achten Ausführungsvariante erfolgt eine Verlagerung des Ballons 1 in die +/-x-Richtung und/oder in die +/-y-Richtung über die angetriebenen Halte- und Richtungswechselelemente R10, R20, R30, R40.

In der achten Ausführungsvariante sind die Fesselseile F1, F2; F3, F4 gegenüber den bisherigen Ausführungsvarianten und der vorgegebenen Lage des kartesischen Koordinatensystems um 45° verschwenkt angeordnet. Diese Anordnung stellt ein Ausführungsbeispiel dar. Beispielsweise ist auch eine Ausgestaltung denkbar, die im Grundriss (Draufsicht) einem unregelmäßigen Viereck entspricht. Gemäß ihrer Lage innerhalb des Koordinatensystems sind die Fesselseile in der dargestellten Ausführungsvariante mit F-YX und F-XY bezeichnet. Die Fesselseile F1, F2 bilden jetzt je ein Fesselseil F-YX und die Fesselseile F3, F4 bilden jetzt je ein Fesselseil F-XY.

Die Fesselseile F-YX, F-XY sind punktuell über ihre ballonabgewandten Enden über die angetriebene Halte- und Richtungswechselelemente R10, R20, R30, R40 mit dem Gelände G verbunden.

In bevorzugter Ausgestaltung der Erfindung sind in der achten Ausführungsvariante alle Halte- und Richtungswechselelemente R10, R20, R30, R40 Spill- oder Trommelwinden. Die Figur 9 Einzelheit J zeigt beispielhaft eine Winde.

Über die angetriebenen Winden R10, R20, R30, R40 ist der Ballon 1 und die damit zugehörige Last in zwei Raumrichtungen in die +/-x-Richtung und die +/-y-Richtung automatisch verlagerbar. Der Ballon 1 ist durch Verkürzen und Verlängern der Fesselseile F1, F2, F3, F4 in +/-x-Richtung und in +/-y-Richtung gleichzeitig in zwei Raumrichtungen verlagert.

Es versteht sich, dass der Ballon 1 beim Verkürzen der Fesselseile F1, F2, F3, F4 gleichzeitig in -z-Richtung beziehungsweise beim Verlängern der Fesselseile F1, F2, F3, F4 gleichzeitig in +z-Richtung seine Höhe gegenüber dem Gelände G verändert.

Die sternförmige Anbindung des Ballons erlaubt ebenfalls eine pendelarme Fesselung und Verlagerung des Ballons 1 in die gewünschten Raumrichtungen x, y, z.

Die Bewegung des Ballons 1 und damit der zugehörigen Last in die Raumrichtungen in die +/-x-Richtung und die +/-y-Richtung sowie +/-z-Richtung erfolgt automatisch über vier Windenbediener direkt an den Halte- und Richtungswechselelementen oder ferngesteuert.

Durch gezieltes, gleichzeitiges oder wechselseitiges Verlängern beziehungsweise Verkürzen von F1, F2, F3, F4 wird der Ballon 1 und die angehängte Last in +/-z-Richtung gleichzeitig mit der Verlagerung in +/-x-Richtung und/oder +/-y-Richtung in +/-z-Richtung verlagert.

Es versteht sich, dass die automatisch bedienbaren Halte- und Richtungswechselelemente fernsteuerbar ausgebildet sein können, so dass eine Bedienung direkt an den jeweiligen Halte- und Richtungswechselelementen nicht notwendig ist. Die Fernsteuerung erfolgt softwaregeschützt über eine zu dem Ballonkransystem B gehörende Steuerkonsole.

### Bezugszeichenliste

- B; B1, B2, B3: Ballonkransystem
- I: erster Typ einer Verschiebevorrichtung
- II: zweiter Typ einer Verschiebevorrichtung
- III: dritter Typ einer Verschiebevorrichtung
- 1: Auftriebskörper, Ballon
- 3: Ballonknoten
- 4: Zwischenseil
- 5: Kranknoten
- 6: Fesselseile
- 8: Hakenseil
- 20: Fixierungselement; Ösenkranzband
- 51: erstes unteres Führungselement
- 52: zweites oberes Führungselement
- 53: Führungselement mit Doppelführung
- 60: Lastaufnahmemittel
- 70: Antrieb
- BA1: Anker
- BA2: Anker
- BA3: Anker
- BA4: Anker
- F11: Gabelseil
- F12: Gabelseil
- F1112: zusammengefasstes Fesselseil
- F1: Fesselseil
- F1D: dehnbares Element
- F1-H: Höhenverstellelement
- F21: Gabelseil
- F22: Gabelseil
- F2122: zusammengefasstes Fesselseil
- F2: Fesselseil
- F2D: dehnbares Element
- F2-H: Höhenverstellelement
- F31: Gabelseil
- F32: Gabelseil
- F3132: zusammengefasstes Fesselseil
- F3: Fesselseil
- F41: Gabelseil
- F42: Gabelseil
- F4142: zusammengefasstes Fesselseil
- F4: Fesselseil
- F-X: erstes Fesselseil (F1, F2)
- F-Y: zweites Fesselseil (F3, F4)
- Fi-x: antriebslose Verschiebevorrichtung, Schienenpaar (x-Richtung)
- Fi-y: antriebslose Verschiebevorrichtung, Schienenpaar (y-Richtung)
- Fa-x: angetriebene Verschiebevorrichtung, Schienenpaar (x-Richtung)
- Fa-y: angetriebene Verschiebevorrichtung, Schienenpaar (y-Richtung)
- H5152: indirekte Halteseile
- H10: antriebsloses Halte- und Richtungswechselelement, Umlenkrollen
- H20: antriebsloses Halte- und Richtungswechselelement, Umlenkrollen
- H30: antriebsloses Halte- /Richtungswechselelement, Umlenkrollen
- H40: antriebsloses Halte- /Richtungswechselelement, Umlenkrollen
- H100: zusätzliche Umlenkrolle
- H200: zusatzliche Umlenkrolle

- R10: angetriebenes Halte- und Richtungswechselelement, Spillwinde
- R20: angetriebenes Halte- und Richtungswechselelement, Spillwinde
- R30: angetriebenes Halte- /Richtungswechselelement, Spillwinde
- R40: angetriebenes Halte- /Richtungswechselelement, Spillwinde
- L: Lastseile
- G: Gelände
- V: Verschiebeläufer
- a: Abstand
- x: horizontale Richtung
- y: Raumrichtung der Horizontalen orthogonal zur x-Richtung, Querrichtung
- z: Raumrichtung in der Vertikalen des Elementes orthogonal zur x-Richtung

## Patentansprüche

1. Ballonkransystem (B; B1, B2; B3) umfassend mindestens einen fesselseilgeführten Auftriebskörper (1), insbesondere mindestens einen Ballon, und ein Seilsystem zur Fesselung des Auftriebskörpers (1) in seiner durch eine ständige Auftriebskraft (1) schwebenden Gebrauchsposition, wobei das Seilsystem mindestens ein mit einer Hülle des Auftriebskörpers (1) verbundenes Fixierungselement (20) aufweist, welches entlang eines vorgebbaren Breitengrades des Auftriebskörpers (1) angeordnet ist, und mindestens vier Fesselseile (F1, F2, F3, F4) aufweist, die einerseits auf dem vorgegebenen Breitengrad im Wesentlichen gleichmäßig auf dem zugehörigen Umfang des Auftriebskörpers (1) verteilt an dem Fixierungselement (20) angreifen, und die andererseits indirekt auf einem Gelände (G) unterhalb des Auftriebskörpers (1) verankert sind, wobei die Verankerung mit dem Gelände (G) über mit den mindestens vier Fesselseilen (F1, F2, F3, F4) in Verbindung stehende antriebslose Halte- und Richtungswechselelemente (H10, H20, H30, H40) und/oder angetriebene Halte- und Richtungswechselelemente (R10, R20, R30, R40) erfolgt,
- die ausschließlich geländefest angeordnet sind, und eine erste Verschiebevorrichtung (I) bilden, oder
- die teilweise geländefest und teilweise auf einer zwischengeschalteten geländefesten Verschiebevorrichtung (Fi-x, Fi-y; Fa-x, Fa-y) angeordnet sind, und eine zweite kombinierte Verschiebevorrichtung (II) bilden, oder
- die ihrerseits ausschließlich auf mindestens einer zwischengeschalteten geländefesten Verschiebevorrichtung (Fi-x, Fi-y; Fa-x, Fa-y) angeordnet sind und eine dritte Verschiebevorrichtung (III) bilden.

2. Ballonkransystem nach Anspruch 1,
**dadurch gekennzeichnet, dass**
das Fixierungselement (20) auf dem Äquator oder einem unterhalb des Äquators liegenden Breitengrad angeordnet ist.

3. Ballonkransystem nach Anspruch 1,
**dadurch gekennzeichnet, dass**
das Fixierungselement (20) ein Ösenkranzband ist, welches mindestens vier Ösen zum Einhängen der vier Fesselseile (F1, F2, F3, F4) umfasst.

4. Ballonkransystem nach Anspruch 1,
**dadurch gekennzeichnet, dass**
vier Fesselseile (F1, F2, F3, F4) auf der Seite des Auftriebskörpers (1) Gabelseile (F11, F12; F21, F22; F31; F32) umfassen, die in ein Ösenkranzband eingreifen, welches mehr als vier Ösen, insbesondere mehrere Ösen zum Einhängen der Gabelseile (F11, F12; F21, F22; F31; F32) der vier Fesselseile (F1, F2, F3, F4) umfasst.

5. Ballonkransystem nach Anspruch 1,
**dadurch gekennzeichnet, dass**
die zwischengeschaltete Verschiebevorrichtung (Fi-x, Fi-y; Fa-x, Fa-y) als antriebslose Verschiebevorrichtung (Fi-x, Fi-y) oder als angetriebene Verschiebevorrichtung (Fa-x, Fa-y) ausgebildet ist.

6. Ballonkransystem nach Anspruch 5,
**dadurch gekennzeichnet, dass**
die zwischengeschaltete Verschiebevorrichtung (Fi-x, Fi-y; Fa-x, Fa-y) mindestens ein geländefestes Schienensystem ist, welches aus mindestens zwei geländefesten Schienen eines Schienenpaares ausgebildet ist.

7. Ballonkransystem nach Anspruch 5,
**dadurch gekennzeichnet, dass**
die zwischengeschaltete Verschiebevorrichtung (Fi-x, Fi-y; Fa-x, Fa-y) mindestens ein geländefestes Seilzugsystem ist, welches aus mindestens zwei geländefesten Seilen eines Seilpaares ausgebildet ist.

8. Ballonkransystem nach Anspruch 5,
**dadurch gekennzeichnet, dass**
die antriebslosen Halte- und Richtungswechselelemente (H10, H20, H30, H40) Umlenkrollen sind.

9. Ballonkransystem nach Anspruch 5,
**dadurch gekennzeichnet, dass**
die angetriebenen Halte- und Richtungswechselelemente (R10, R20, R30, R40) Spill- oder Trommelwinden sind.

10. Ballonkransystem nach Anspruch 1, **dadurch gekennzeichnet, dass** zwei Fesselseile (F1, F2) ein durchgehendes Fesselseil (F-X) und zwei Fesselseile (F3, F4) ein weiteres durchgehendes Fesselseil (F-Y ) bilden.

11. Ballonkransystem nach Anspruch 10,
**dadurch gekennzeichnet, dass**
mindestens eines der durchgehenden Fesselseile (F-X, F-Y) innerhalb des Seilsystems über mindestens ein am Südpol des Auftriebskörpers (1) angeordnetes Führungselement (51, 52, 53) geführt ist.

12. Ballonkransystem nach den Ansprüchen 1 und 11,
**dadurch gekennzeichnet, dass**
der über die mindestens vier Fesselseile (F1, F2, F3, F4) mit dem Gelände (G) indirekt verbundene Auftriebskörper (1) mittels einer der Verschiebevorrichtungen (I, II, III) in mindestens eine Raumrichtung (x, y) in +/-x-Richtung und/oder +/-y-Richtung und/oder +/z-Richtung verfahrbar ist.

13. Ballonkransystem nach den Ansprüchen 10 bis 12,
**dadurch gekennzeichnet, dass**
es bei der Verlagerung des Auftriebskörper (1) mittels einer der Verschiebevorrichtungen (I, II, III) in mindestens eine Raumrichtung (x, y) in +/-x-Richtung und/oder +/-y-Richtung über die mindestens vier Fesselseile (F1, F2, F3, F4) zu einer gezielten Veränderung der Teillängen (F1, F2) des Fesselseiles (F-X) relativ zu einem Führungselement (51, 53) und/oder durch die gezielte Veränderung der Teillängen (F3, F4) des Fesselseiles (F-Y) relativ zu einem anderen Führungselement (52, 53) automatisch zum Anheben oder Absenken des Auftriebskörpers (1) und der Last gegenüber dem Gelände (G) in eine dritte Raumrichtung (z) in +/- z-Richtung kommt.
